Europäisches Patentamt

**European Patent Office**

**Office européen des brevets**

(11) Publication number: **0 151 500**
**B1**

(12) **EUROPEAN PATENT SPECIFICATION**

(45) Date of publication of patent specification: **09.08.89**

(21) Application number: **85200112.2**

(22) Date of filing: **04.02.85**

(51) Int. Cl.⁴: **A 47 J 31/40, A 47 J 31/46, B 67 D 3/02**

(54) Device for regulating the discharge of liquid from a tank.

(30) Priority: **03.02.84 NL 8400343**

(43) Date of publication of application:
**14.08.85 Bulletin 85/33**

(45) Publication of the grant of the patent:
**09.08.89 Bulletin 89/32**

(84) Designated Contracting States:
**AT BE CH DE FR GB IT LI LU NL SE**

(56) References cited:
**BE-A- 671 477**
**FR-A- 861 881**
**FR-A-1 515 525**
**US-A-1 840 985**
**US-A-2 786 606**
**US-A-3 082 915**
**US-A-3 144 031**
**US-A-3 149 556**
**US-A-3 479 949**

(73) Proprietor: **JEDAHO B.V.**
**Baarnseweg 29c**
**NL-3735 HK Bosch en Duin (NL)**

(72) Inventor: **Hooghiemstra, George Alfred**
**Baarnseweg 29c**
**NL-3735 HK Bosch en Duin (NL)**

(74) Representative: **van der Beek, George Frans, Ir. et al**
**Nederlandsch Octrooibureau Scheveningseweg 82 P.O. Box 29720**
**NL-2502 LS 's-Gravenhage (NL)**

Courier Press, Leamington Spa, England.

## Description

The invention relates to a device for regulating the discharge of liquid from a tank, in particular for use in a drinks vending machine, provided with an inlet hose or inlet pipe section, one end of which being connected to a discharge connection of the tank via a flexible hose, a predetermined movement of the free end of said hose or pipe section being possible between two positions.

A device of this type is described in US-A-3,479,949. In this prior art device the free end of the inlet pipe is embodied as a floating cup which will move from a first to a second position as the liquid within the tank rises because an amount of liquid is introduced into the tank. If the liquid rises above the level of the second position the cup becomes completely submerged into the liquid and moves back to the first position, meanwhile allowing liquid to flow through the hose or pipe section to the discharge connection of the tank. The delivery of liquid stops as the liquid level falls under the level of the free end of the pipe section. Because this free end is floating, dripping of liquid caused by expansion of water in the tank is prevented.

A disadvantage of this device is that only one rather large predetermined amount of liquid can be delivered, which amount has to be larger than the level difference between the two positions. Said amount is in fact equal to the amount of liquid poured into the tank.

Another prior art device comprising a hose or pipe section connected to the discharge connection of a tank, destined to deliver liquid to one of a number of receiving cups is described in FR-A-1,515,525. In this prior art device the free end of the hose or pipe section is moved by means of a rotating motor driving an eccentric actuating a rod for moving the free end of the hose or pipe section between the first and second position. In this case the hose or pipe section is not used for metering purposes.

An object of the invention is now to provide a device of the above mentioned type which offers a more flexible liquid amount metering facility and still prevents drippage of water.

In agreement with this object the invention now provides a device of the above indicated type, which is characterized in that (i) the inlet section is a hose or pipe section;

(ii) said hose or pipe section is through suitable connecting means connected to a drive motor, activation of which causes said predetermined movement of the free end of said hose pipe section between at least two positions;

(iii) said drive motor being controlled by timing means controlling said drive motor such that for discharging a predetermined amount of liquid from said tank the inlet section is moved from a first position to a second position, maintained at said second position during a predetermined period, and is moved back from the second position to the first position, whereby the first position of the free end of the hose or pipe section is above the maximum liquid level in the tank and the second position of the free end of the hose or pipe section is below the maximum liquid level in the tank.

Such a device, in which in the first position in particular the free end of the hose or pipe section is above the maximum liquid level in the tank and in the second position the free end is at a predetermined level below the maximum liquid level in the tank, can be used as a replacement for a hot water outflow valve via which hot water is supplied from a tank to a discharge pipe. In the first position, in which the free end of the hose or pipe section is above the maximum liquid level, no water is delivered, and in the second position, which position is maintained during a predetermined time period, a predetermined amount of water is delivered, said predetermined amount being dependent on both said time period as well as the water flow rate through the hose or pipe section.

The device according to the invention can also be designed as a distribution device, thus replacing a number of valves in the known drinks vending machine for delivering water to a particular discharge pipe from a number of discharge pipes. In that case the device is preferably designed in such a way that the free end of the hose or pipe section at a level lower than the level of the discharge connection is movable between at least two positions, in each of which said free end of the hose or pipe section is connected to a different discharge pipe for discharge of liquid from the tank via the device to the particular discharge pipe. It is preferable to use a combination of one or more relays and an accompanying transmission system to produce the movement of the free end of the hose or pipe section.

An embodiment of the invention will be described below in a greater detail, and it is pointed out that the invention is not limited to this embodiment.

Figure 1 shows a schematic view of part of a drinks vending machine, in particular a boiler with a water discharge mechanism connected to it.

Figure 2 shows a side view of the part of the drinks vending machine from figure 1, along the lines I-I and II-II.

Figure 3 shows a view along the line III-III in figure 2.

Figure 4 shows a schematic view of part of a drinks vending machine, in particular a boiler with a water discharge mechanism connected to it.

Figure 5 shows a side view of the part of the drinks vending machine form figure 4, along the line V-V.

The Figures 6 and 7 illustrates a further embodiment of the system according to the invention.

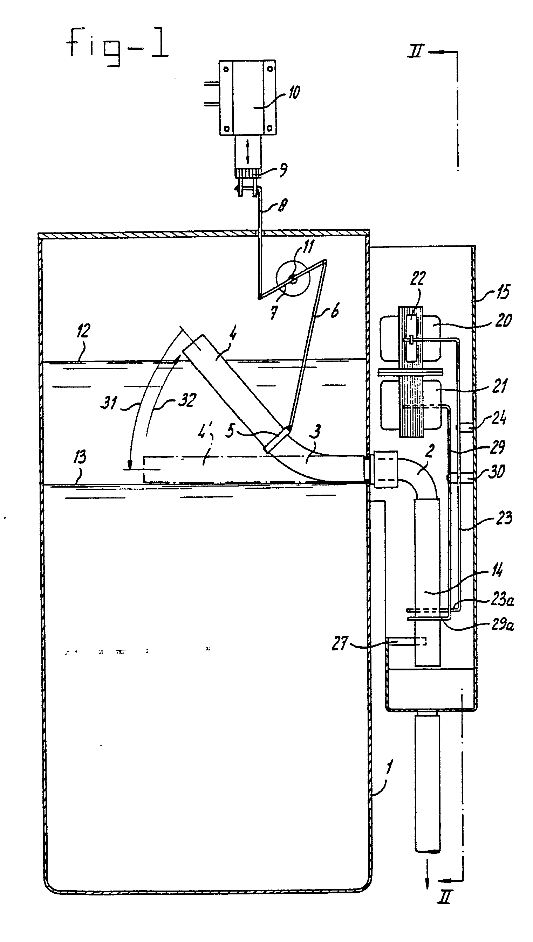

Figure 1 shows a tank 1 designed as a boiler and provided with a discharge spout 2, which is designed as an elbow-shaped pipe section which is fixed by means of a cap nut in the side wall of the tank 1. On the inside of the tank, the relatively rigid hose section 4 is connected to this discharge spout via the relatively flexible hose section 3. As shown by the arrows 31 and 32 (sic) in Figure 1, the pipe section 4 can move between the position indicated by the lines drawn in the figure and the position indicated by the dotted lines 4' in the figure in which latter position the pipe runs practically horizontally. A sleeve 5 is provided at the relatively rigid hose section 4 and the relatively flexible hose section 3. A rod system, consisting of the rods 6, 7 and 8, is hingeably interconnected at the ends. The rod 6 is also hingeably connected to the sleeve 5, and the rod 8 is hingeably connected to the armature 9 of a relay 10. The middle rod 7 is hingeably connected in its central part to a fixed hinge point 11.

It will be clear from the figure that on activation of a relay 10, as a result of which the armature 9 moves upwards from the illustrated position, the rod 8 will also be drawn upwards, which causes the rod 7 to rotate about the rotation point 11, so that the rod 6 is moved downwards, thereby causing the hose or pipe section 4, as it were, to pivot about the flexible hose 3, and with the correct dimensioning the whole mechanism will at the end of the movement have reached the position shown by the dotted line 4'. If the activation of the relay 10 is stopped, the armature 9 — and thus also the rod system 8, 7 and 6 and the pipe section 4 connected therewith — will move back to the illustrated position through the action of a spring which is not illustrated.

In the figure, the free end of the pipe 4 is above the maximum water level in the boiler, indicated by 12. When the relay 10 is activated, the free end will be immersed in the water below the maximum water level and water will be discharged from the boiler via the pipe 4, the flexible hose part 3 and the discharge spout 2, and via other parts of the device yet to be described. The minimum level at which water can still be delivered is shown in the figure by 13.

The relay 10 can, for example, be controlled by a timing system and with the aid thereof be activated for a particular period, so that during this period water is discharged via the pipe 4, the hose 3 and the discharge spout 2. The quantity of water supplied is then directly determined by these timing elements.

It is, however, also possible to activate the relay 10 at least long enough for the water to fall from level 12 to level 13, in other words, until the delivery of water stops. In that case the quantity of water delivered is determined directly by the starting level 12 and the finishing level 13.

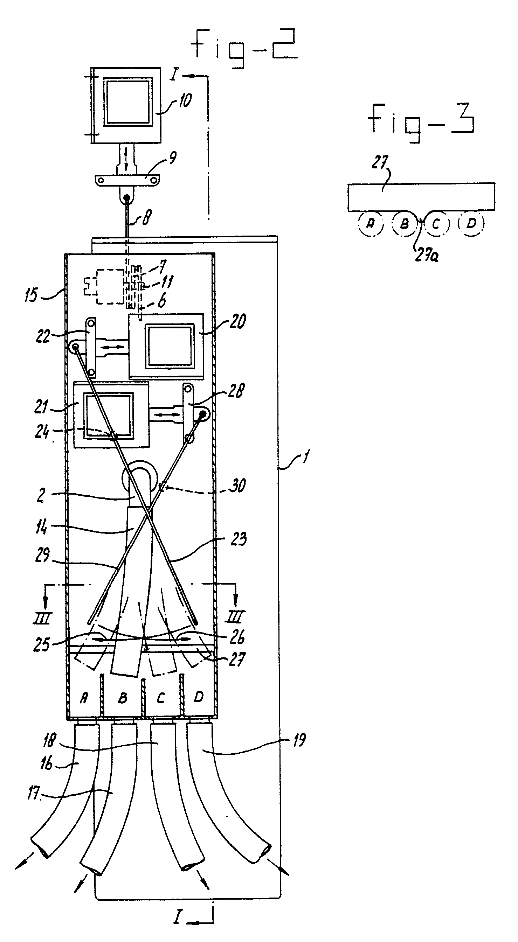

Fig. 2 is a view of Fig. 1 along the lines I-I and II-II in Fig. 1. The parts visible at the top of Fig. 2 have already been discussed with reference to Fig. 1.

As can be seen from Figs. 1 and 2, provision is made at the discharge side of the discharge spout 2 for another pipe or hose section 14, of which at least the part near the discharge spout 2 must be flexible, so that the pipe or hose section 14 can execute a more or less pivoting movement in relation to the discharge spout 2. As can be seen from the figures, the discharge spout and the hose section 14 are located in a distribution chamber 15 which is divided at the bottom via partitions into a number of compartments indicated by A, B, C and D. Connected to each of these compartments is a discharge hose 16, 17, 18, 19 for discharge of the water brought in via the hose 14. As can be seen clearly from Fig. 2, the free end of the hose 14 can be moved in such a way that the water flowing out of the hose 14 reaches one of the compartments A, B, C or D and is carried on from there to other parts of the drinks vending machine via the relevant discharge pipe 16, 17, 18, 19.

The movement of the hose 14 is carried out using two relays, indicated in the figure by 20 and 21. The armature 22 of the relay 20 is hingeably connected to a rod 23 whose underside debouches in a part 23a which is bent through 90 degrees and which engages with the hose 14. The rod 23 is attached to the wall of the distribution chamber 15 and is rotatable via a rotation point 24.

On activation of the relay 20, the armature 22 will be drawn into the relay 20, so that the top end of the rod 23 in Fig. 2 moves to the right and the bottom end 23a of the rod 23 moves in the direction of the arrow 25. During this movement the end of the hose 14 will thus be moved to above the compartment A. If the activation of the relay 20 is broken off, the armature 22 — and thus the rod 23 — will return to the position shown in Fig. 2. By the force of gravity, on the one hand, and under the influence of the spring force of the top flexible part of this hose 14, on the other, the end of the hose 14 will want to return to the central position, but this will be prevented by a cam plate 27 which is provided on the rear wall of the distribution chamber 15 shown in Fig. 2. This cam plate 27, which is shown in greater detail in Fig. 3, is provided with a cam 27a, which projects over practically half the diameter of the hose 14 beyond the actual cam plate 27. The return movement of the end of the hose 14 described above, after the relay 20 has been brought to rest, will be stopped by this cam 27a, so that the hose 14 then debouches above the compartment B and remains in this position. With the aid of the relay 20, the end of the hose 14 can thus be positioned above compartment A or above compartment B.

For positioning above compartments C and D, provision is made for a further relay 21, whose armature 28 is hingeably connected with a rod 29, the end 29a of which is turned through 90 degrees in the same way as the end 23a and is used to move the end of the hose 14. The rod 29 is connected via a fixed rotation point 30 with a wall of the distribution chamber 15, in the same way as the rod 23.

On activation of the relay 21, the armature 28 will be drawn into the relay, so that the end 29a of the rod 29 executes a movement along a path which is indicated by the arrow 26 in Fig. 2. From the above description of the movement executed with the rod 23, in will now be clear that with this rod 29 and the relay 21 the end of the hose 14 can be positioned either above compartment D or above compartment C.

The dimensions of the cam 27a on the cam plate 27 must be selected in such a way that the hose 14 is certain to be retained in the position above compartment B or in the position above compartment C when neither of the two relays 20 or 21 is activated, and in such a way that on activation of the relays in question, thanks to the flexible properties in at least the top part of the hose 14, the end of the hose can pass the cam 27a.

Although the attached drawings show an embodiment of the device according to the invention which is particularly intended for use in a drinks vending machine, it will be clear that various modifications of this embodiment are possible.

If the stroke of the armatures of the various relays is large enough per se, the rod system interconnected partly for the purpose of increasing the stroke of the relay if it is to short can be left out. If in particular the stroke of the armature 9 corresponds to the length of the path over which the sleeve 5 has to move, a direct connection between the armature 9 and the sleeve 5 can be achieved, possibly via a pivoting intermediate rod. The relays 20 and 21 can also be fitted, for example, on either side of the distribution chamber 15 at the level of the 2 cam plate 27a (sic) with armatures moving in the horizontal plane. In that case the armatures must be able to move far enough to permit the above-described movement of the hose 14 over the compartments A, B, C and D.

It will also be clear that the drawings give only a schematic impression of the actual apparatus. The various fastening elements required for fastening the relay 10 and the exact embodiments of the various hinge points and coupling mechanisms and the like are not shown in detail and are considered within the scope of an expert.

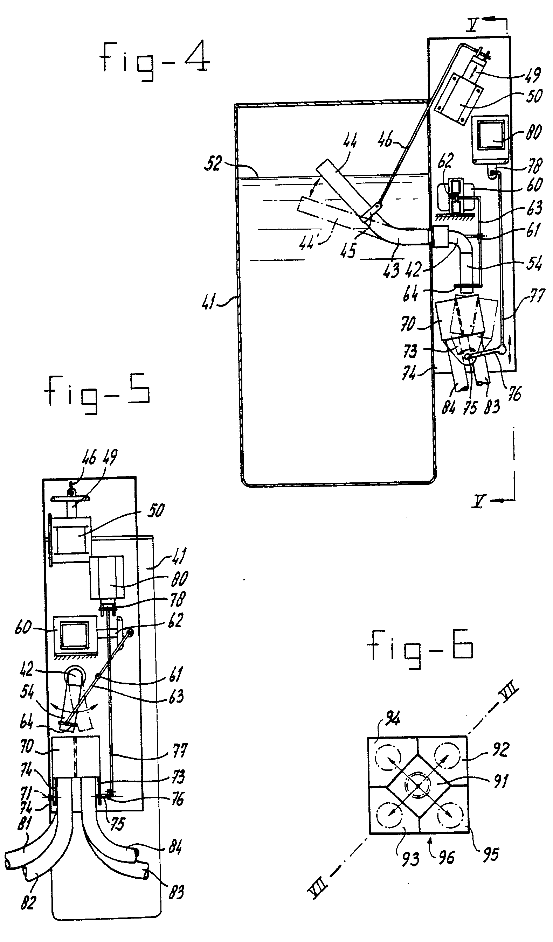

Fig. 4 shows a tank 41 designed ss a boiler and provided with a discharge spout 42, which is designed as an elbow-shaped pipe section which is fixed by means of a cap nut in the side wall of the tank 41. In the inside of the tank, the relatively rigid hose section 44 is connected to this discharge spout via the relatively flexible hose section 43. As shown by the two-headed arrow in Fig. 1, the pipe section 44 can move between the position indicated by the lines drawn in the figure and the position indicated by the dotted lines 44' in the figure. A sleeve 45 is provided at the relatively rigid hose section 44 and near the relatively flexible hose section 43. A rod system, consisting of the rod 46 is hingeable interconnected at the ends. A rod 46 is hingeably connected to the sleeve 45, and the other end of said rod is hingeably connected to the armature 49 of a relay 50.

It will be clear from the figure that on activation of the relay 50, as a result of which the armature 49 moves downwards from the illustrated position, the rod 46 is moved downwards, thereby causing the hose or pipe section 44, as it were, to pivot about the flexible hose 43, and with the correct dimensioning the whole mechanism will at the end of the movement have reached the position showed by the dotted line 44'. If the activation of the relay 50 is stopped, the armature 49 — and thus also the rod 46 and the pipe section 44 connected therewith — will move back to the illustrated position through the action of a spring which is not illustrated.

In the figure, the free end of the pipe 44 is above the maximum water level in the boiler, indicated by 52. When the relay 50 is activated, the free end of pipe section 44 will be immersed in the water below the maximum water level and water will be discharged from the boiler via the pipe 44, the flexible hose part 43 and the discharge spout 42, and via other parts of the device yet to be described.

The relay 50 can, for example, be controlled by a timing system and with the aid thereof be activated for a particular period, so that during this period water is discharged via the pipe 44, the hose 43 and the discharge spout 42. The quantity of water supplied is then directly determined by these timing elements.

It is, however, also possible to activate the relay 50 at least long enough for the water to fall from level 12 to the level of the pipe section in position 44', in other words, until the delivery of water stops. In that case the quantity of water delivered is determined directly by the two levels.

Fig. 5 is a view of Fig, 4 along the line V-V in Fig. 4. The parts visible at the top of Fig. 5 have already been discussed with reference to Fig. 4.

As can be seen from Figs 4 and 5, provision is made at the discharge side of the discharge spout 42 for another pipe or hose section 54, of which at least the part near the discharge spout 42 must be flexible, so that the pipe or hose section 54 can execute a more or less pivoting movement in relation to the discharge spout 42. The movement of the hose 54 is carried out using a relay 60. The armature 62 of the relay 60 is hingeably connected to a rod 63 whose underside is connected to a ring shaped element 64 attached around the hose 54. The rod 63 is attached to the wall of the boiler construction and is rotatable via a rotation point 61.

On activation of the relay the armature 62 will be drawn into the relay 60, so that the top end of the rod 63 in Fig. 5 moves to the right and ring element 64 at the bottom end of the rod 63 moves in the direction of the arrow 65. During this movement the end of the hose 54 will thus be moved over a certain distance above a combination of receiving cups to be described.

Underneath the bottom end of said hose 54 a configuration of four receiving cups is positioned, illustrated in general with the reference number 70. This configuration consists in principle of a combination of four receiving cups arranged into a rectangular array and fixed to each other or integrally formed together such that they can be considered as one component which is pivotable around an axis 71. The receiving cup component 71 has in the illustrated embodiment at both sides extending parts 72 and 73 with through-going passages by means of which said receiving cup component is pivotably installed at the shafts 74 and 75. An extending rod 76 is fixedly connected to one of the extending parts 73, and a lever rod 77 is hingeably connected to the outer end of said rod 76. The other end of the lever rod 77 is hingeably connected to the armature 78 of a third relay 80.

It will be clear from the Figure that, when the relay 80 is activated, causing a movement of the armature 78 in the downwards direction, the lever 77 will cause a pivoting movement of the receiving cup component 71 to the position which is indicated in Fig. 4 by dot and dash lines. As soon as the control signal of the relay 80 disappears the armature 78 will be brought back to the indicated position under the influence of a not illustrated spring and the receiving cup component 71 will return to the position indicated by full lines in Fig. 4.

Each of the receiving cups is at the underside thereof connected to a discharge hose 81, 82, 83 or 84, through which the liquid can flow to further destinations in the drinks vending machine in which the illustrated system can be used.

As already said, activation of the relay 60 will cause a movement of the hose 54 in Fig. 5 from the left to the right. If the activation of the relay 60 is broken off, then the armature 62, and thus the rod 63, will return to the position shown in Fig. 5.

It will be clear that by suitably controlling the relays 60 and 80 it will be possible to move on the one hand the bottom end of the hose 54 and on the other hand the receiving cup component 71 in such a way that liquid is discharged from the boiler into one of the discharge hoses 81, 82, 83 or 84.

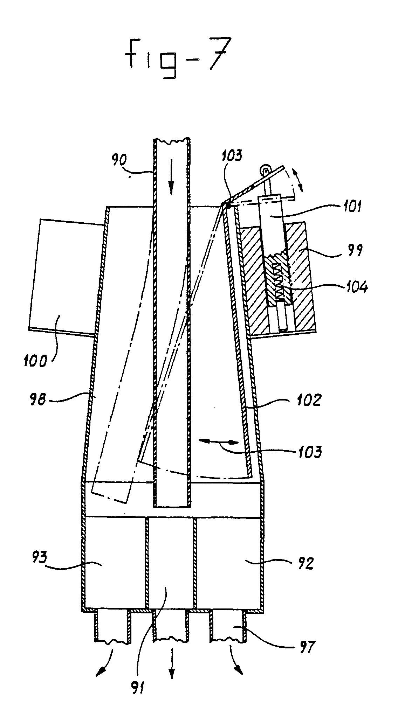

A further embodiment of the system according to the invention is illustrated in figures 6 and 7. Fig. 7 shows only the discharge hose 90 which in the unactivated situation hangs downwards vertically and ends above the central cup 91 of a cup receiving component which in general is indicated by 96 in figure 6. Said cup component comprises furthermore the cups 92, 93, 94 and 95 surrounding the central cup 91. Each of the cups of said component is at their bottom connected to a discharge channel, one of which is indicated by 97 in figure 7, running to further destinations in the vending machine.

The cups are attached to the underside of a plate housing 98, the walls of which carry four relays, one of which is indicated by 99 in figure 7 and one of which is schematically indicated by 100 in said figure. The armature 101 is coupled to a bend lever 102, which is at 103 pivotably carried by the housing 98. Activation of the relay 99 will cause a downward movement of the armature 101 resulting into a movement of the downwards end of the lever 102 in the direction of the arrow 103 to the position indicated by dash and dot lines in figure 7. The result thereof is that the downwards end of the hose 90 will be moved from above the cup 91 to above the cup 93. Deenergizing of the relay 99 will result in a backwards movement of the armature 101 and the thereto coupled lever 102 to the position illustrated in figure 7, and in the backwards movement of the hose 90 to the illustrated position.

It will be clear that by means of three additional similar relays, one of which is indicated by 100, the downwards end of the hose 90 can be moved to any one of the cups 92, 93, 94 or 95, which movements are indicated by arrows in figure 6.

It is remarked that instead of four relays it is also possible to use only two relays of the type in which the armature can move from a stationary position over a certain distance in the one direction or over a similar distance in the opposite direction. Relays of such type, comprising e.g. two relay coils, are known themselves.

It is furthermore remarked that actuation means other than relays can be used for causing the movement of the flexible hose sections. However, because of the simplicity and the reliability relays are preferred.

## Claims

1. A device for regulating the discharge of liquid from a tank, in particular for use in a drinks vending machine, provided with an inlet hose or inlet pipe section, one end of which being connected to a discharge connection of the tank via a flexible hose, a predetermined movement of the free end of said hose or pipe section being possible between two positions, characterized in that (i) the inlet section is a hose or pipe section;

(ii) said hose or pipe section is through suitable connecting means connected to a drive motor, activation of which causes said predetermined movement of the free end of said hose pipe section between at least two positions;

(iii) said drive motor being controlled by timing means controlling said drive motor such that for discharging a predetermined amount of liquid from said tank the inlet section is moved from a first position to a second position, maintained at said second position during a predetermined period, and is moved back from the second position to the first position, whereby the first position of the free end of the hose or pipe section is above the maximum liquid level in the tank and the second position of the free end of the hose or pipe section is below the maximum liquid level in the tank.

2. Device according to Claim 1, characterised in that in the second position the hose or pipe section runs essentially horizontally.

3. Device according to one of the preceding claims, characterised in that the hose or pipe section and the flexible hose are located in the tank.

4. Device according to any of Claims 1 or 2, characterised in that said free end at a level lower than the level of the discharge connection is movable between at least two positions, in each of which said free end of the hose or pipe section is connected to a different discharge pipe for discharge of liquid from a tank via the device to the particular discharge pipe.

5. Device according to any of the preceding claims, characterised in that the hose or pipe section is connected with the armature of a relay, which means that the free end of the hose or pipe section can be moved between at least two positions.

6. Device according to Claim 5, characterised in that a stroke increasing transmission system is fitted between the armature and the working point of the armature on the hose or pipe section.

7. Device according to Claim 5 or 6, characterised in that the working point of the armature or of the stroke-increasing transmission system on the hose or pipe section is chosen on the transition point between the hose or pipe section and the flexible hose.

8. Device according to any of Claims 4 to 7, characterised in that the free end of the hose or pipe section can be shifted between two positions in which the hose or pipe section on one side or on the other rests against a cam which projects over practically half the diameter of the hose or pipe section into its path of travel, and in that there are two relays whose armatures are linked with drive rods whose ends release the hose or pipe section when the relays are not activated, and which push the hose or pipe section in one direction or in the other past the cam when the relay in question is activated.

9. Device according to Claim 8, characterised in that the free end of the hose or pipe section can be shifted on each side of the cam to a further position in which the end does not rest against the cam, and the stroke of each of the driving rod ends is sufficient to move the hose or pipe section to the corresponding extreme positions when the relay in question is activated continuously and to hold it in that position, while with short activation of the relay in question the hose or pipe section, after reaching the extreme position and after relay drop, moves back and comes to rest in the adjacent position resting against one side of the cam.

10. Apparatus for dispensing a specific quantity of liquid from a tank, characterised by a device according to any of Claims 1 to 3 or 5 to 7, in which the volume of liquid is determined by the difference between the maximum liquid level and the level of the second position corresponding to said specific quantity of liquid.

11. Vending machine for the dispensing of drinks, provided with a hot water boiler, the discharge part of which is linked to other parts of the vending machine, characterised in that a device according to any of Claims 1 to 3 or 5 to 7 is used for the discharge of a measured quantity of hot water.

12. Vending machine for the dispensing of drinks, provided with a hot water boiler, the discharge part of which is linked to a number of discharge pipes running to other parts of the vending machine, characterised in that the coupling between the outlet part and the discharge pipes is achieved by means of a device according to any of Claims 4 to 9.

13. System for discharging a liquid from a tank to one of a number of destinations, comprising a discharge pipe section, connected to said tank, the non-connected end of said discharge pipe section being movable to a number of positions, a number of receiving cups guiding the liquid to conduits running to the respective destinations, the number of receiving cups being equal to the number of destinations, an actuating mechanism for moving said end of the discharge pipe section to one of said number of positions, in each of which said discharge pipe is above one of said number of receiving cups, characterized in that the actuating mechanism comprises a relay, the armature of which can be moved dependent onto a control signal supplied to the relay coil between two different positions, which movement is transformed into a movement of the end of the discharge pipe section to a first position or to a second position.

14. System according to Claim 13, characterized in that the actuating mechanism comprises a second relay or similar device, the armature of which can be moved, dependent onto a control signal supplied to the relay coil, between two different positions, which movement is transformed into a movement of the end of the discharge pipe section to a third position or to a fourth position.

15. System according to Claim 14, characterized in that the first and second respectively third and fourth positions are located at both sides of a cam which projects over practically half the diameter of the discharge pipe section into its path of travel, that the armatures of both relays are linked with drive rods whose ends release the pipe section when the relays are not activated, the stroke of each drive rod end being sufficient, when the respective relay is continuously activated, to move the discharge pipe section end to the first respectively fourth position and maintain the pipe section end in said position, while with short activation of the respective relay the pipe section end, after reaching the extreme position and after the relay is switched unactive, moves back and comes to rest in the adjacent position, resting in the respective second or third position against one side of the cam.

16. System according to Claim 13, characterized in that the actuation mechanism comprises a second relay, the armature of which can, dependent on a control signal supplied to the relay coil, moved to two different positions, which movement is transformed into a movement of the receiving cups to a first position or to a second position such, that with the receiving cups in their first position the end of the discharge pipe section can be moved by the first relay to a position above a first or second receiving cup, whereas with the receiving cups in their second position the end of the discharge pipe section can be moved to a position above a third or fourth receiving cup.

17. System according to Claim 13, characterized in that the receiving cups are arranged into an array of two rows and two columns, that the first relay takes care of the movement of the end of the discharge pipe section in the column direction and the second relay takes care of the movement of the receiving cups in the row direction.

## Patentansprüche

1. Vorrichtung zur Regulierung der Abgabe einer Flüssigkeit aus einem Behälter, insbesondere zur Verwendung in einer Getränkeverkaufsvorrichtung, die mit einem Einlassschlauch- oder Einlassrohrabschnitt versehen ist, dessen eines Ende mit einem Abgabeabschnitt des Behälters über einen biegsamen Schlauch verbunden ist, wobei eine vorbestimmte Bewegung des freien Endes des Schlauch- oder Rohrabschnittes zwischen zwei Positionen möglich ist, dadurch gekennzeichnet, dass

(i) der Einlassabschnitt ein Schlauch- oder Rohrabschnitt ist;

(ii) der Schlauch- oder Rohrabschnitt durch eine entsprechende Verbindungsvorrichtung mit einem Antriebsmotor verbunden ist, dessen Einschaltung die vorbestimmte Bewegung des freien Endes des Schlauch- oder Rohrabschnittes zwischen mindestens zwei Positionen veranlasst;

(iii) der Antriebsmotor durch eine Zeitgeberanordnung gesteuert wird, die den Antriebsmotor derart steuert, dass zwecks Abgabe einer vorbestimmten Flüssigkeitsmenge aus dem Behälter der Einlassabschnitt von einer ersten Position in eine zweite Position bewegt wird, an der zweiten Position während einer vorbestimmten Zeitspanne gehalten wird, und von der zweiten Position zur ersten Position zurückbewegt wird, wobei die erste Position des freien Endes des Schlauch- oder Rohrabschnittes oberhalb des maximalen Flüssigkeitsspiegels im Behälter liegt und die zweite Position des freien Endes des Schlauch- oder Rohrabschnittes unterhalb des maximalen Flüssigkeitsspiegels im Behälter liegt.

2. Vorrichtung nach Anspruch 1, dadurch gekennzeichnet, dass in die zweite Position der Schlauch- oder Rohrabschnitt im wesentlichen horizontal verläuft.

3. Vorrichtung nach einem der vorausgehenden Ansprüche, dadurch gekennzeichnet, dass sich der Schlauch- oder Rohrabschnitt und der biegsame Schlauch im Behälter befinden.

4. Vorrichtung nach einem der Ansprüche 1 oder 2, dadurch gekennzeichnet, dass das erwähnte freie Ende auf einem Pegel, der niedriger als der Pegel des Abgabeanschlusses liegt, zwischen mindestens zwei Positionen beweglich ist, in jeder von welchen das freie Ende des Schlauch- oder Rohrabschnittes mit einem verschiedenen Abgaberohr zur Abgabe von Flüssigkeit aus einem Behälter über die Vorrichtung an ein jeweiliges Abgaberohr verbunden ist.

5. Vorrichtung nach einem der vorausgehenden Ansprüche, dadurch gekennzeichnet, dass der Schlauch- oder Rohrabschnitt mit dem Anker eines Relais verbunden ist, was besagt, dass das freie Ende des Schlauch- oder Rohrabschnittes zwischen mindestens zwei Positionen bewegt werden kann.

6. Vorrichtung nach Anspruch 5, dadurch gekennzeichnet, dass ein hubvergrösserndes Übertragungssystem zwischen dem Anker und dem Arbeitspunkt des Ankers am Schlauch- oder Rohrabschnitt eingesetzt ist.

7. Vorrichtung nach Anspruch 5 oder 6, dadurch gekennzeichnet, dass der Arbeitspunkt des Ankers oder des hubvergrössernden Übertragungssystems am Schlauch- oder Rohrabschnitt am Übergangspunkt zwischen dem Schlauch- oder Rohrabschnitt und dem biegsamen Schlauch gewählt ist.

8. Vorrichtung nach einem der Ansprüche 4 bis 7, dadurch gekennzeichnet, dass das freie Ende des Schlauch- oder Rohrabschnittes zwischen zwei Positionen verstellt werden kann, in welchen der Schlauch- oder Rohrabschnitt an der einen oder der anderen Seite gegen einen Nocken anliegt, der praktisch über die Hälfte des Durchmessers des Schlauch- oder Rohrabschnittes in dessen Bewegungsbahn vorsteht, und dass zwei Relais vorhanden sind, deren Anker mit Antriebsstäben verbunden sind, deren Enden den Schlauch- oder Rohrabschnitt freigeben, wenn die Relais nicht eingeschaltet sind, und die den Schlauchoder Rohrabschnitt in der einen oder der anderen Richtung am Nocken vorbeistossen, wenn das in Frage stehende Relais betätigt wird.

9. Vorrichtung nach Anspruch 8, dadurch gekennzeichnet, dass das freie Ende des Schlauch- oder Rohrabschnittes an jeder Seite des Nockens in eine weitere Position verstellt werden kann, in der das Ende nicht gegen den Nocken anliegt, und dass der Hub eines jeden Antriebsstabendes ausreicht, um den Schlauch- oder Rohrabschnitt zu den entsprechenden äussersten Stellungen zu bewegen, wenn das in Frage stehende Relais kontinuierlich betätigt wird und ihn in dieser Position zu halten, während bei einer kurzen Betätigung des in Frage stehenden Relais der Schlauch- oder Rohrabschnitt, nachdem er die äusserste Position erreicht hat und das Relais abgefallen ist, sich zurückbewegt und in der benachbarten Position zur Ruhe kommt, in der er gegen eine Seite des Nockens anliegt.

10. Vorrichtung zur Abgabe einer bestimmten Flüssigkeitsmenge aus einem Behälter, gekennzeichnet durch eine Vorrichtung nach einem der Ansprüche 1 bis 3 oder 5 bis 7, bei welcher das Flüssigkeitsvolumen durch den Unterschied zwischen dem maximalen Flüssigkeitspegel und dem Pegel der zweiten Position bestimmt wird, der der bestimmten Flüssigkeitsmenge entspricht.

11. Verkaufsvorrichtung für die Abgabe von Getränken, die mit einem Heisswasserbereiter ausgestattet ist, dessen Abgabeabschnitt mit anderen Teilen der Verkaufsvorrichtung verbunden ist, dadurch gekennzeichnet, dass eine Vorrichtung gemäss einem der Ansprüche 1 bis 3 oder 5 bis 7 zur Abgabe einer abgemessenen Menge heissen Wassers verwendet wird.

12. Verkaufsvorrichtung zur Abgabe von Getränken, die mit einem Heisswasserbereiter ausgestattet ist, dessen Abgabeabschnitt mit einer Anzahl von Abgaberohren verbunden ist, die sich zu anderen Teilen der Verkaufsvorrichtung erstrecken, dadurch gekennzeichnet, dass die Kopplung zwischen dem Ablassabschnitt und den Ablassrohren mittels einer Vorrichtung gemäss einem der Ansprüche 4 bis 9 erzielt wird.

13. System zur Abgabe einer Flüssigkeit aus einem Behälter an eine Anzahl von Bestimmungsorten, mit einem mit dem Behälter verbundenen Abgaberohrabschnitt, wobei das nicht angeschlossene Ende des Abgaberohrabschnittes in eine Anzahl Positionen bewegbar ist, einer Anzahl von Füllbechern, die die Flüssigkeit zu Leitungen führen, die zu den jeweiligen Bestimmungsorten gehen, wobei die Anzahl der Füllbecher gleich der Anzahl der Bestimmungsorte ist, und mit einer Betätigungsvorrichtung zur Bewegung des Endes des Abgaberohrabschnittes an eine der Anzahl der Positionen, in jeder derselben sich das Abgaberohr oberhalb einer der Anzahl der Aufnahmebecher befindet, dadurch gekennzeichnet, dass die Betätigungsvorrichtung ein Relais umfasst, dessen Anker abhängig von einem der Relaisspule zugeführten Steuersignal zwischen zwei verschiedenen Positionen bewegbar ist, und diese Bewegung in eine Bewegung des Endes des Abgaberohrabschnittes in eine erste Position oder in eine zweite Position umgewandelt wird.

14. System nach Anspruch 13, dadurch gekennzeichnet, dass die Betätigungsvorrichtung ein zweites Relais oder entsprechende Vorrichtung umfasst, dessen Anker, abhängig von einem der Relaisspule zugeführten Steuersignal, zwischen zwei verschiedenen Positionen bewegbar ist, und die Bewegung in eine Bewegung des Endes des Abgaberohrabschnittes in eine dritte oder eine vierte Position umgewandelt wird.

15. System nach Anspruch 14, dadurch gekennzeichnet, dass die erste und zweite bzw. dritte und vierte Position sich an beiden Seiten eines Nockens befinden, der über praktisch den halben Durchmesser des Abgaberohrabschnittes in dessen Bewegungsbahn hineinragt, dass die Anker beider Relais mit Antriebsstäben verbunden sind, dessen Enden bei nicht betätigten Relais den Rohrabschnitt freigeben, dass der Hub eines jeden Antriebsstabendes ausreicht, wenn das entsprechende Relais kontinuierlich betätigt wird, das Abgaberohrabschnittende in die erste bzw. vierte Position zu bewegen und das Rohrabschnittende in dieser Position zu halten, während bei einer kurzen Betätigung des jeweiligen Relais das Rohrabschnittende sich nach Erreichen der äussersten Position und nach dem Abschalten des Relais zurückbewegt und in der benachbarten Position zur Ruhe kommt und in der jeweils zweiten oder dritten Position gegen eine Seite des Nockens anliegt.

16. System nach Anspruch 13, dadurch gekennzeichnet, dass die Betätigungsvorrichtung ein zweites Relais umfasst, dessen Anker, abhängig von einem der Relaisspule zugeführten Steuersignal, an zwei verschiedene Positionen bewegt werden kann, und die Bewegung in eine Bewegung der Füllbecher in eine erste position oder eine zweite Position in solcher Weise umgewandelt wird, dass, während die Füllbecher sich in ihrer ersten position befinden, das Ende des Abgaberohrabschnittes durch das erste Relais in eine Position über einem ersten oder zweiten Aufnahmebecher bewegt werden kann, während, wenn sich die Füllbecher in ihrer zweiten Position befinden, das Ende des Aufnahmerohrabschnittes in eine Position über einem dritten oder vierten Füllbecher bewegt werden kann.

17. System nach Anspruch 13, dadurch gekennzeichnet, dass die Füllbecher in einer Anordnung von zwei Reihen und zwei Spalten angeordnet sind, dass das erste Relais die Bewegung des Endes des Abgaberohrabschnittes in Spaltenrichtung besorgt, und dass das zweite Relais die Bewegung der Füllbecher in Reihenrichtung besorgt.

## Revendications

1. Dispositif permettant de régler la distribution de liquide d'un réservoir, plus particulièrement destiné à être utilisé dans une machine de vente de boissons, comprenant un tronçon de tube d'entrée ou de tuyau d'entrée dont une extrémité est reliée par un tube souple à un raccord de distribution du réservoir, un déplacement prédéterminé de l'extrémité libre du tronçon de tube ou de tuyau étant possible entre deux positions, caractérisé en ce que:

(i) le tronçon d'entrée est un tronçon de tube ou de tuyau,

(ii) ce tronçon de tube ou de tuyau est relié, par des moyens appropriés de jonction, à un moteur d'entraînement dont le fonctionnement provoque le déplacement prédéterminé de l'extrémité libre de ce tronçon de tube ou de tuyau entre au moins deux positions et

(iii) ce moteur d'entraînement est commandé par des moyens de synchronisation le commandant d'une façon telle que, pour distribuer une quantité de liquide préfixée à partir du réservoir, le tronçon d'entrée est déplacé d'une première position à une seconde position, est maintenu dans cette seconde position pendant une période de temps prédéterminée et est ramené de cette seconde position à la première position, tandis que la première position de l'extrémité libre du tronçon de tube ou de tuyau est située au-dessus du niveau maximal de liquide dans le réservoir, tandis que la seconde position de cette extrémité libre du tronçon de tube ou de tuyau est située au-dessous de ce niveau maximal de liquide dans le réservoir.

2. Dispositif suivant la revendication 1, caractérisé en ce que, dans la seconde position, le tronçon de tube ou de tuyau s'étend de façon essentiellement horizontale.

3. Dispositif suivant l'une quelconque des revendications précédentes, caractérisé en ce que le tronçon de tube ou de tuyau et le tube souple sont situés dans le réservoir.

4. Dispositif suivant l'une quelconque des revendications 1 et 2, caractérisé en ce que l'extrémité libre à un niveau inférieur au niveau du raccord de distribution est mobile entre au moins deux positions dans chacune desquelles cette extrémité libre du tronçon de tube ou de tuyau est associée à un tuyau différent de distribution en vue de distribuer du liquide d'un réservoir à ce tuyau particulier de distribution par l'intermédiaire du dispositif.

5. Dispositif suivant l'une quelconque des revendications précédentes, caractérisé en ce que le tronçon de tube ou de tuyau est relié à l'armature d'un relais, ce qui signifie que l'extrémité libre de ce tronçon de tube ou de tuyau peut être déplacée entre au moins deux positions.

6. Dispositif suivant la revendication 5, caractérisé en ce qu'un système de transmission accroissant la course est monté entre l'armature et le point d'action de cette armature sur le tronçon de tube ou de tuyau.

7. Dispositif suivant la revendication 5 ou 6, caractérisé en ce que le point d'action de l'armature ou du système de transmission accroissant la course, sur le tronçon de tube ou de tuyau est choisi au point de transition entre ce tronçon de tube ou de tuyau et le tuyau souple.

8. Dispositif suivant l'une quelconque des revendications 4 à 7, caractérisé en ce que l'extrémité libre du tronçon de tube ou de tuyau peut être déplacée entre deux positions dans lesquelles ce tronçon de tube ou de tuyau repose, d'un côté ou de l'autre, sur une came qui fait saillie sur pratiquement la moitié du diamètre du tronçon de tube ou de tuyau, sur sa trajectoire de déplacement, et en ce qu'il existe deux relais dont les armatures sont associées à des tiges de manoeuvre dont les extrémités libèrent le tronçon de tube ou de tuyau lorsque les relais ne sont pas activés et qui repoussent ce tronçon de tube ou de tuyau dans un sens ou dans l'autre, en le faisant passer devant la came, lorsque le relais en question est activé.

9. Dispositif suivant la revendication 8, caractérisé en ce que l'extrémité libre de tronçon de tube ou de tuyau peut être décalée en position, sur chaque côté de la came, jusqu'à une autre position où cette extrémité ne repose pas sur la came et en ce que la course de chacune des extrémité de tige de manoeuvre est suffisante pour déplacer le tronçon de tube ou de tuyau jusqu'aux positions extrêmes correspondantes, lorsque le relais en question est activé de manière continue, et pour le maintenir dans cette position, tandis qu'avec une brève activation du relais en question, le tronçon de tube ou de tuyau, après qu'il ait atteint la position extrême et après que le relais soit retombé, revient, pour y reposer, dans la position voisine, en reposant sur un côté de la came.

10. Appareil de distribution d'une quantité déterminée de liquide à partir d'un réservoir, caractérisé par un dispositif suivant l'une quelconque des revendications 1 à 3 ou 5 à 7, dans lequel le volume de liquide est déterminé par la différence existant entre le niveau maximal de liquide et le niveau de la seconde position correspondant à ladite quantité spécifique de liquide.

11. Machine de vente pour la distribution de boissons, comportant un appareil à eau chaude dont la partie de distribution est associée à d'autres parties de cette machine de vente, celle-ci étant caractérisée en ce qu'un dispositif conforme à l'une quelconque des revendications 1 à 3 ou 5 à 7 est utilisé pour la distribution d'une quantité mesurée d'eau chaude.

12. Machine de vente pour la distribution de boissons, comportant un appareil à eau chaude dont la partie de distribution est associée à un certain nombre de tuyaux de distribution conduisant à d'autres parties de cette machine de vente, celle-ci étant caractérisée en ce que l'accouplement entre la partie de sortie et les tuyaux de distribution est réalisé au moyen d'un dispositif conforme à l'une quelconque des revendications 4 à 9.

13. Système de distribution d'un liquide à partir d'un réservoir et vers un certain nombre de destinations, comprenant un tronçon de tuyau de distribution, relié au réservoir, l'extrémité non reliée de ce tronçon de tuyau étant déplaçable selon un certain nombre de positions,
un certain nombre de godets récepteurs guidant le liquide vers des conduits se dirigeant vers les différentes destinations, le nombre de ces godets étant égal au nombre de destinations,
un mécanisme d'actionnement permettant de déplacer l'extrémité du tronçon de tuyau de distribution vers l'une parmi les multiples positions, position dans laquelle le tuyau de distribution est situé au-dessus de l'un parmi les multiples godets récepteurs,
caractérisé en ce que ce mécanisme d'actionnement comprend un relais dont l'armature peut être déplacée, sous l'influence d'un signal de commande fourni à la bobine de ce relais, entre deux positions différentes, ce déplacement étant transformé en un déplacement de l'extrémité du tronçon de tuyau de distribution vers une première position ou vers une seconde position.

14. Système suivant la revendication 13, caractérisé en ce que le mécanisme d'actionnement comprend un second relais ou dispositif analogue dont l'armature peut être déplacée, sous l'influence d'un signal de commande fourni à la bobine de ce relais, entre deux positions différentes, ce déplacement étant transformé en un déplacement de l'extrémité du tronçon de tuyau de distribution vers une troisième position ou vers une quatrième position.

15. Système conforme à la revendication 14, caractérisé en ce que soit les première et seconde, soit les troisième et quatrième positions sont disposées de part de d'autre d'une came qui fait saillie, sur pratiquement la moitié du diamètre du tronçon de tuyau de distribution, sur sa trajectoire de déplacement, en ce que les armatures des deux relais sont associées à des tiges d'entraînement dont les extrémités libèrant le tronçon de tuyau lorsque ces relais ne sont pas activés, la course de l'extrémité de chaque tige d'entraînement étant suffisante, lorsque le relais associé est activé de manière continue, pour déplacer l'extrémité du tronçon du tuyau de distribution vers soit la première, soit la quatrième position et pour maintenir cette extrémité de tronçon de tuyau dans cette position, tandis qu'avec une brevè activation du relais associé, cette extrémité du tronçon de tuyau, après qu'elle ait atteint la position extrême et après qu'on ait fait passer le relais en position désactivée, recule, pour y reposer, dans la position voisine, en reposant soit dans la seconde, soit dans la troisième position, en appui sur un côté de la came.

16. Système suivant la revendication 13, caractérisé en ce que le mécanisme d'actionnement comprend un second relais dont l'armature peut, sous l'influence d'un signal de commande fourni par la bobine de relais, se déplacer vers deux positions différentes, ce déplacement étant transformé en un déplacement des godets récepteurs vers une première position ou vers une seconde position de façon que, lorsque les godets récepteurs sont dans leur première position, l'extrémité de tronçon de tuyau de distribution peut être déplacée par le premier relais vers une position située au-dessus d'un premier ou d'un second godet de distribution, tandis que, lorsque les godets récepteurs sont dans leur seconde position, l'extrémité du tronçon de tuyau de distribution peut être déplacée vers une position située au-dessus d'un troisième ou d'un quatrième godet récepteur.

17. Système suivant la revendication 13, caractérisé en ce que les godets récepteurs sont disposés suivant un agencement ordonné de deux rangées et deux colonnes et en ce que le premier relais prend en charge le déplacement de l'extrémité du tronçon de tuyau de distribution suivant la direction des colonnes et le second relais prend en charge le déplacement des godets récepteurs suivant la direction des rangées.

fig-1

Fig-2

Fig-3

fig-4

fig-5

fig-6

3

# fig-7